Europäisches Patentamt

European Patent Office

Office européen des brevets

(11) Veröffentlichungsnummer: **0 185 152**
A2

## (12) EUROPÄISCHE PATENTANMELDUNG

(21) Anmeldenummer: 85111988.3

(22) Anmeldetag: 21.09.85

(51) Int. Cl.⁴: **F 16 J 15/10**

(30) Priorität: 15.12.84 DE 3445870

(43) Veröffentlichungstag der Anmeldung:
25.06.86 Patentblatt 86/26

(84) Benannte Vertragsstaaten:
DE FR GB IT SE

(71) Anmelder: GOETZE AG
Bürgermeister-Schmidt-Strasse 17
D-5093 Burscheid 1(DE)

(72) Erfinder: Bechen, Heribert, Dipl.-Ing.
Wichheimer Strasse 305
D-5000 Köln 80(DE)

(54) Imprägnierte Flachdichtung, insbesondere Zylinderkopfdichtung für Verbrennungskraftmaschinen, und ihr Herstellungsverfahren.

(57) Bei einer imprägnierten Weichstoffflachdichtung, wie insbesondere einer Zylinderkopfdichtung für Verbrennungskraftmaschinen, wird das additionsvernetzende Imprägniermittel unter Verwendung von auf die Dichtung aufgelegten Schablonen durch Elektronenstrahlen vernetzt. Die Schablone besitzt Öffnungen und Bereiche unterschiedlicher Durchlässigkeit für Elektronenstrahlen, so daß beim Bestrahlen in der Dichtung das Imprägniermittel unterschiedlich stark vernetzt wird. Schwach vernetztes oder unvernetztes Imprägniermittel kann anschließend mit Lösungsmitteln extrahiert werden. Die Dichtung besitzt dann entsprechend der verwendeten Schablone beziehungsweise dem Vernetzungsgrad des Imprägniermittels Bereiche mit unterschiedlichen Verformungseigenschaften und damit ein von Ort zu Ort auf den jeweiligen Anwendungsfall angepaßtes optimales Verformungsverhalten.

FIG. 1

EP 0 185 152 A2

- 1 -

Imprägnierte Flachdichtung, insbesondere Zylinderkopfdichtung für Verbrennungskraftmaschinen, und
ihr Herstellungsverfahren.

Die Erfindung betrifft eine imprägnierte Weichstoffflachdichtung, wie insbesondere eine Zylinderkopfdichtung für
Verbrennungskraftmaschinen, bestehend aus einem gegebenenfalls metallisch verstärkten Faservlies, dessen Poren
mit einem anschließend vernetzten Imprägniermittel ganz
oder teilweise gefüllt sind, wobei die Dichtung eine von
Ort zu Ort unterschiedliche Verformungscharakteristik
aufweist, sowie die Vorrichtung und das Herstellungsverfahren der Dichtung.

Insbesondere Zylinderkopfdichtungen, Auspuffflanschdichtungen oder andere Flachdichtungen in Verbrennungskraftmaschinen aus gegebenenfalls metallisch verstärkten Faservliesen werden vor allem zur Erhöhung ihrer Festigkeit, zur Verbesserung ihrer Beständigkeit gegenüber den
Abdichtmedien und zur Verbesserung ihres Abdichtverhaltens imprägniert. Imprägniermittel sind beispielsweise
nach der DE-AS 23 04 505 vernetzbare und lösungsmittelfreie Imprägniermittel, und die Imprägniermittel werden
anschließend in der Dichtungsplatte unter Zusatz von vor
allem Peroxiden meist thermisch vernetzt. Bevorzugte Imprägniermittel sind dabei flüssige Polybutadiene, Polyacrylate, ungesättigte Polyester oder flüssige Silikonelastomere, die ohne Abgabe verdampfender Substanzen
unter Polyaddition über die Kohlenstoffdoppelbindungen vernetzen. In der Praxis ist dabei nach beispielsweise der US-PS 4.291.087 auch bekannt, die in diesem Fall aus Polyacrylaten bestehenden Imprägniermittel durch die Einwirkung energiereicher Elektronenstrahlen zu vernetzen.

Zylinderkopfdichtungen werden ferner beim Einbau zwischen die Dichtflächen von Motorblock und Zylinderkopf je nach Konstruktion des Motors durch die unterschiedliche Dichtpressung unterschiedlich stark belastet. Zum Ausgleich ist es beispielsweise nach der DE-AS 23 04 505 üblich, die Bereiche des Weichstoffes unterhalb der metallischen Einfassungen insbesondere an den Brennraumöffnungen frei von Imprägniermittel zu halten, um so in diesen belasteten Zonen die Dichtpressung zu erhöhen.

Nach der DE-AS 10 74 341 ist es bekannt, zur Vergleichmäßigung der Dichtpressung und zur Vermeidung von Zylinderverzügen die Verformungscharakteristik der Dichtung, angepaßt an den Anwendungsfall, von Ort zu Ort unterschiedlich zu gestalten. Nach einer bevorzugten Lösung der DE-AS 10 74 341 wird dazu die Weichstoffdichtung mit einer die Verformbarkeit beeinflussenden Tränkung versehen, wobei dafür gesorgt wird, daß die Tränkemittelaufnahme der Dichtung von Ort zu Ort verschieden hoch ist.

Das Imprägnieren von Weichstoffdichtungsplatten mit einer partiellen beziehungsweise von Ort zu Ort unterschiedlichen Tränkemittelaufnahme ist jedoch in der Praxis schwierig. So werden nach der DE-AS 23 04 505 die fertig mit Einfassungen versehenen Dichtungen bevorzugt durch Tauchen imprägniert. Trotz der abschirmenden Einfassungen kann bei einem solchen Verfahren das Eindringen von Imprägniermittel unter die Einfassungen nicht ganz vermieden werden. Ebenso breitet sich beim partiellen Imprägnieren der Flachdichtungen nach der DE-AS 10 74 341 das flüssige Tränkemittel über die ganze Dichtungsplatte allmählich aus, und es entsteht schließlich eine ganzflächig gleichmäßig imprägnierte Flachdichtung.

Der vorliegenden Erfindung liegt daher die Aufgabe zugrunde, eine imprägnierte Weichstoffflachdichtung mit einer von Ort zu Ort unterschiedlichen Verformungscharakteristik zu schaffen. Das Verfahren der Herstellung soll möglichst einfach und kostensparend sein, und vor allem sollen damit produktionssicher Flachdichtungen mit definierter, von Ort zu Ort unterschiedlicher Verformungscharakteristik mit regulierbarer Gleichmäßigkeit hergestellt werden können.

Erfindungsgemäß wird diese Aufgabe durch eine mit einem additionsvernetzenden Imprägniermittel imprägnierte Flachdichtung gelöst, deren Imprägniermittel durch Elektronenstrahlung von Ort zu Ort unterschiedlich stark vernetzt ist.

Durch den Vernetzungsvorgang wird das fließende beziehungsweise plastisch leicht verformbare Imprägniermittel in einen härteren beziehungsweise elastischen, nur noch schwer verformbaren Zustand überführt. Je nach Vernetzungsgrad des Imprägniermittels besitzt dadurch die

- 4 -

imprägnierte Flachdichtung eine von Ort zu Ort unterschiedliche Verformungscharakteristik und einen Zustand zwischen leichter plastischer Verformbarkeit bei nur schwach vernetztem Imprägniermittel und hoher Verformungssteifigkeit bei stark beziehungsweise nahezu vollständig vernetztem Imprägniermittel. Die Anordnung der Dichtzonen mit stark oder schwach vernetztem Imprägniermittel erfolgt entsprechend dem spezifischen Anwendungsfall und wird bevorzugt nach empirischen Ergebnissen festgelegt.

Zur Herstellung der erfindungsgemäßen Flachdichtung wird von einer nach einem der bekannten Verfahren imprägnierten Flachdichtung ausgegangen, wobei das Imprägniermittel aus einer elektronenstrahlvernetzbaren Flüssigkeit mit gegebenenfalls Vernetzungsmitteln und weiteren Zusätzen besteht. Die Dichtung wird mit einer Schablone aus einem unterschiedlich elektronenstrahldurchlässigen Material abgedeckt, und anschließend erfolgt die Vernetzung des Imprägniermittels durch Bestrahlung der von der Schablone nicht abgedeckten Dichtungsbereiche mit Elektronenstrahlen, wobei der gebündelte Elektonenstrahl bevorzugt rasterartig über die Schablone geführt wird. Der Prozeß kann dann auf der anderen Dichtungsseite wiederholt werden.

Entsprechend der Abdeckung der Dichtung durch die Schablone dringen die Elektronenstrahlen mit gesteuerter unterschiedlicher Intensität in die Dichtungsplatte ein und vernetzen dort das Imprägniermittel entsprechend. Die

- 5 -

Schablone besitzt dabei in entsprechender Anordnung Öffnungen, durch die die Elektronenstrahlen auf die Dichtung fallen und dort das Imprägniermittel vernetzen. Abgeschirmte Dichtungsbereiche werden dann nicht vernetzt. Die Schablone kann aber auch aus einer mehr oder weniger elektronenstrahldurchlässigen Folie bestehen. In diese Folie sind dann Öffnungen gestanzt, durch die Elektronenstrahlen auf die Dichtung ungeschwächt fallen. In den Bereichen der Dichtungen, in denen das Imprägniermittel nicht vernetzt werden soll, ist die Schablone mit Metallstreifen aus elektronenstrahlundurachlässigem Material entsprechend abgedeckt, und in den Bereichen einer geringen Vernetzung des Imprägniermittels ist die Folie entsprechend dick gestaltet, so daß ein Teil der vernetzenden Elektronenstrahlen herausgefiltert wird.

Nach einer weiteren Ausgestaltung der Erfindung kann die imprägnierte Flachdichtung nach dem Vernetzen einer Extraktion mit einem Lösungsmittel ausgesetzt werden. Dabei werden leicht lösliche unvernetzte und schwach vernetzte Imprägniermittel aus der Dichtung herausgelöst, und es entstehen beispielsweise am nachträglich eingefaßten Brennraumrand imprägniermittelfreie Zonen.

Im Sinne der Erfindung ist es auch möglich, das Imprägniermittel in der Dichtung zunächst nach einem konventionellen Verfahren bevorzugt thermisch vorzuvernetzen und daran anschließend unter Verwendung von Schablonen mit Elektronenstrahlen nachzuvernetzen. Auf diese Weise wird eine längere Bestrahlungszeit der Dichtung verringert.

Durch die Erfindung ist somit eine imprägnierte Flachdichtung geschaffen, welche Bereiche mit unterschiedlich starker Vernetzung des Imprägniermittels und gegebenenfalls auch Imprägniermittelfreiheit besitzt. Die Dichtung hat somit eine von Ort zu Ort unterschiedliche Verformungscharakteristik, sie besitzt entsprechend der Vernetzung des Imprägniermittels eine optimale Abdichtungsgüte in den erforderlichen Bereichen und eine optimale Anpassung an die Konstruktion der entsprechenden Maschinenteile. Die Dichtung wirkt damit, insbesondere in Verbrennungskraftmaschinen, gegebenenfalls auftretenden Zylinderverzügen wirkungsvoll entgegen.

Durch die Verwendung von Schablonen mit Öffnungen, von Ort zu Ort unterschiedlicher Dicke und gegebenenfalls Auflagen aus elektronenstrahlundurchlässigem Material ist der Vernetzungsgrad des Imprägniermittels steuerbar, auf den jeweiligen Anwendungsfall abgestimmt, einzustellen. Auf diese Weise können Flachdichtungen einfach und kostensparend und insbesondere in der Massenfertigung reproduzierbar mit optimal angepaßten Verformungseigenschaften hergestellt werden.

Die Erfindung wird anhand der Abbildungen 1 bis 3, die sich auf eine bevorzugte Anwendung der Erfindung beziehen, näher erläutert. Und zwar zeigt:

Figur 1   ein Teilstück einer Zylinderkopfdichtung in Aufsicht

Figur 2   das Teilstück einer Schablone zur Herstel-

- 7 -

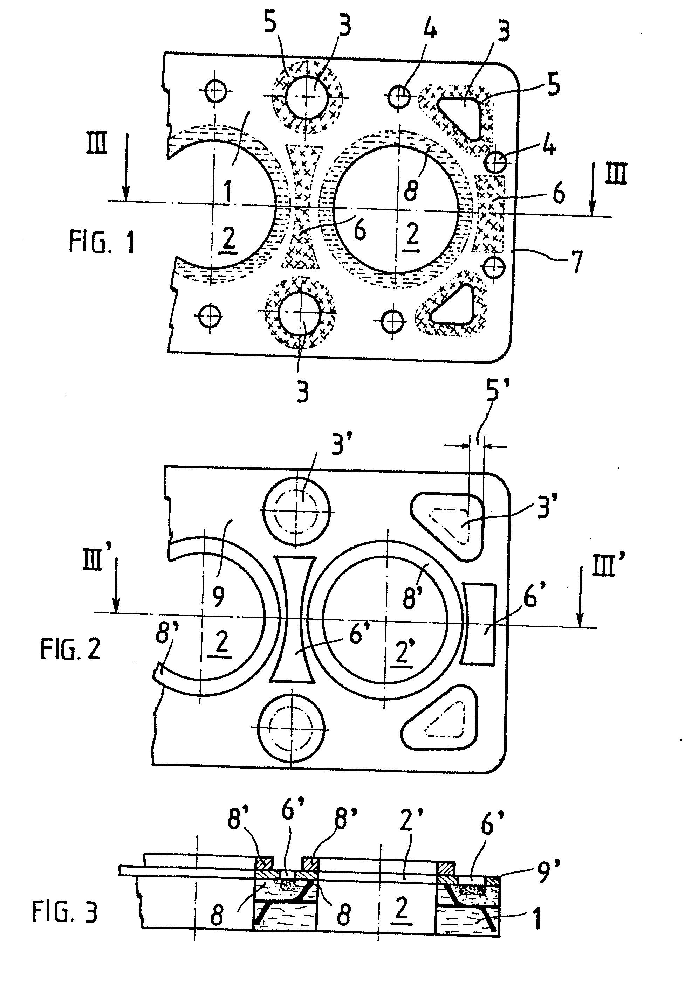

lung der Dichtung nach Figur 1

Figur 3  einen Querschnitt des Dichtungsteilstückes aus Figur 1 in der Linie III - III' mit der aufliegenden Schablone nach Figur 2.

In Figur 1 ist 1 die Dichtungsplatte mit den Brennraumöffnungen 2, den Flüssigkeitsöffnungen 3 und den Schraubenöffnungen 4. Das Imprägniermittel ist in einer ringförmigen Zone 5 rund um die Flüssigkeitsöffnungen 3 stark vernetzt, so daß in diesen eine verbesserte Dichtpressung, Abdichtungswirkung und Medienbeständigkeit besteht. In den Bereichen 6 zwischen den Brennraumöffnungen 2 beziehungsweise zwischen Stirnfläche 7 der Dichtung 1 und einer Brennraumöffnung 2 ist das Imprägniermittel ebenfalls zur Erhöhung der Dichtpressung stärker vernetzt. Der die Brennraumöffnungen 2 umgebende Bereich 8, der bei der einbaufertigen Dichtung metallisch eingefaßt ist, ist durch Extraktion von unvernetztem Imprägniermittel imprägniermittelfrei. In den weniger belasteten Restflächenbereichen der Dichtung 1 ist das Imprägniermittel formstabil mit mittlerem Vernetzungsgrad vernetzt.

Die Schablone 9 der Figur 2 besteht aus einer leicht elektronenstrahlendurchlässigen Aluminiumnfolie, und sie besitzt Öffnungen 2',3' und 4' entsprechend den Öffnungen 2,3 und 4 der Zylinderkopfdichtung der Figur 1. Die Öffnungen 3' sind um die Breite 5' erweitert, und als weitere Öffnungen sind die Öffnungen 6' vorgesehen, so daß beim Bestrahlen die Elektronenstrahlen mit voller Intensität auf die Dichtung 1 auftreten und dort als Imprägniermittel hart vernetzen. Rund um die Öffnungen 2' ist auf die Schablonenplatte 9 eine Auflage 8' als Bleifolie aufgetragen, und die Bleifolie schirmt die Elektronenstrahlen ab. Das beim Bestrahlen darunterliegende Imprägniermittel bleibt unvernetzt und kann durch Extrahieren entfernt werden. Die Aluminiumfolie der Schablone 9 läßt Elektronenstrahlen mit schwach verminderter Intensität durchtreten, und das beim Bestrahlen darunterliegende Imprägniermittel im Restflächenbereich kann entsprechend formstabil vernetzt werden.

Im Querschnitt der Figur 3 ist 1 die Zylinderkopfdichtung mit den Brennraumöffnungen 2. Die aufliegende Schablone 9' besitzt die Öffnungen 2' und 6' und Auflagen 8' aus Bleifolie benachbart zu den Öffnungen 6'. Beim Bestrahlen wird das Imprägniermittel im Bereich 6 unter der Schablonenöffnung 6' durch die mit voller Intensität einfallenden Elektronenstrahlen hart vernetzt. Durch die Bleiauflage 8' auf der Schablone 9 ist das Imprägniermittel in der Zone 8 rund um die Öffnungen 2,2' vor Elektronenstrahlen abgeschirmt, es bleibt unvernetzt und wird durch Extrahieren mit Lösungsmittel entfernt. Die Restflächenbereiche der Dichtung 1 sind lediglich von Aluminiumfolie abgedeckt, die Elektronenstrahlen werden lediglich in der Intensität abgeschwächt, und das Imprägniermittel im darunterliegenden Weichstoffbereich wird bis zur Formstabilität vernetzt.

Patentansprüche:

1. Imprägnierte Weichstoffflachdichtung, insbesondere Zylinderkopfdichtung für Verbrennungskraftmaschinen, bestehend aus einem gegebenenfalls metallisch verstärkten Faservlies, dessen Poren mit einem anschließend vernetzten Imprägniermittel ganz oder teilweise gefüllt sind, dadurch gekennzeichnet, daß das Imprägniermittel durch Elelektronenstrahlung von Ort zu Ort unterschiedlich stark vernetzt ist.

2. Flachdichtung nach Anspruch 1, dadurch gekennzeichnet, daß die Flachdichtung (1) imprägniermittelfreie Zonen (8) aufweist.

3. Verfahren zur Herstellung der Flachdichtung nach den Ansprüchen 1 und 2, dadurch gekennzeichnet, daß eine imprägnierte Flachdichtung (1) mit einer Schablone abgedeckt wird, und daß die Vernetzung des Imprägniermittels durch Bestrahlen der Dichtung mit Elektronenstrahlen unterschiedlicher Intensität erfolgt.

4. Schablone zur Durchführung des Verfahrens nach Anspruch 3, dadurch gekennzeichnet, daß die Schablone Bereiche (2',3',5',6',8') mit unterschiedlicher Durchlässigkeit für Elektronenstrahlen besitzt.

5. Schablone nach Anspruch 4, dadurch gekennzeichnet, daß die Bereiche (2',3',5',6',8') mit unterschiedlicher Durchlässigkeit für Elektronenstrahlen durch Öffnungen (2',3',5',6') in der Schablonenplatte durch Auflagen (8') auf der Dichtungsplatte aus elektronenstrahlundurchlässigem Material und/oder Zonen unterschiedlicher Dicke gebildet sind.

6. Schablone nach den Ansprüchen 1, 4 und 5, dadurch gekennzeichnet, daß die Schablone aus einem Material besteht, welches Elektronenstrahlen nur unter geringem Intensitätsverlust durchläßt.

7. Verfahren zur Herstellung der Dichtung nach Anspruch 2, dadurch gekennzeichnet, daß das Imprägniermittel in der Dichtung (1) in den später imprägniermittelfreien Zonen (8) vor Elektronenstrahlen weitgehend abgeschirmt und dadurch nicht vernetzt oder nur schwach vernetzt wird, und daß anschließend das unvernetzte oder nur schwach vernetzte Imprägniermittel durch Lösungsmittel aus der Dichtung (1) extrahiert wird.

0185152

FIG. 1

FIG. 2

FIG. 3